# EUROPEAN PATENT APPLICATION

(11) **EP 1 193 042 A2**
(43) Date of publication of application: **03.04.2002**
(21) Application number: 01122672.7
(22) Date of filing: 28.09.2001
(51) Int. Cl.: B29C 47/08, B29C 47/66

(54) **Housing for plastics, metal powder, ceramic powder or food processing machines**

(30) Priority: 02.10.2000 DE 10048870
(71) Applicant: Xaloy AG, 4610 Olten (CH)
(72) Inventor: Schubert, Gerritt, Dipl.-Ing., 4623 Neuendorf (CH); Volker, Kai-Uwe, Dipl.-Ing., 84405 Dorfen (DE)
(74) Representative: HOFFMANN - EITLE

(57) **Abstract**

A housing (2) for plastics, metal powder, ceramic powder or food processing machines, more particularly for twin and multiple screw extruders, comprising several married bimetallic barrels (1) including a lining (6) and a backing (5) is characterized in that the bimetallic barrels (2) are diffusion bonded.

## Description

### Field of the Invention

The present invention relates to a housing which is particularly suitable for twin and multiple screw extruders, the housing mainly finding application in the plastics, metal powder, ceramic powder and food processing industry. In accommodating twin and multiple screws, the housing comprises married bimetallic barrels.

In processing plastics compounds, food and the like, more particularly powdery materials, use is made of twin and multiple screw extruders, requiring the solid bimetallic cylinders thereof to be lined hard-wearing to minimize wear problems.

### Prior Art

It is known to produce housings for twin and multiple screw extruders by boring out solid steel round sections and subjecting them to surface hardening, for example by nitriding. Sometimes, the inner wall of the bore is reinforced, for example, by plasma sprayed or electrodeposited hard facing.

Known from DE 30 43 306 is a twin screw extruder comprising a screw housing including a bimetallic insert with a hard-wearing coating. The two cylindrical parts of the insert arranged parallel to each other are married at their points of contact and additionally with beams located outside of the insert by conventional welding or soldering. For this purpose the original cylinders are split lengthwise and subsequently bonded along their free and machined longitudinal edges, exclusively fusion bonding being used for this purpose. Subsequently, finishing is needed to compensate cracks in the hard alloy or pores in the bonding zone as well as distortion due to fusion bonding. The fusion bond does not extend through the wear lining which is bonded in a subsequent step in finishing.

Known from DE 33 27 684 C3 is a housing for twin and multiple screw extruders in which several bimetallic barrels are married axially parallel. The lining of the bimetallic barrels is formulated resistant to wear and/or corrosion. In this arrangement, the housing is configured exclusively of the bimetallic barrels, these bimetallic barrels comprising a wall thickness solely devoted to providing strength in avoiding distinct distortion when marrying the bimetallic barrels along their axially cut edges. The bimetallic barrels are likewise married by welding. In this arrangement the non-hardwearing layers of the bimetallic barrels are bonded by a usual fusion bonding procedure (welding, soldering). The gap remaining unbonded in the region of the hard alloy is closed off in a finishing step to prevent risking the parent material of the bimetallic barrels being ruined by ingress of corrosive plastics or other foreign matter into the gap between the wear linings of the bimetallic barrels.

Other known methods of producing twin cylinders having a seamless inner surface involve preparing bores in a steel housing. In these prepared bores a hard alloy lining is produced either by welding, by flame spraying subsequently consolidated by hot isostatic pressing (HIP) or by filling metal/carbide powder compounds into the interspace between housing bores and solid or hollow cores which are then HIP bonded to the housing bores.

One such method of lining a cavity is described in DE 39 27 854 C2. In this arrangement, a prepared cavity, where necessary in the form of axially parallel married cylinders, is prepared, into which a mandrel is inserted whose outer diameter is slightly smaller than the final inner diameter of the cavity, and subsequently a nickel-based alloy applied to the outer surface of the mandrel. The face ends of the cavity are then closed off and the remaining space containing the alloy is evacuated. By application of the HIP technique the alloy applied to the mandrel is bonded to the blank body and subsequently the mandrel material removed, the nickel-based alloy remaining on the inner surface of the cavity in the desired layer thickness and surface finish.

### Summary of the Invention

The invention is based on the objective of providing a housing for a twin or multiple screw extruder comprising high-strength properties whilst being free of undesirable gaps or cavities into which the product or foreign matter could gain access.

This objective is achieved by a housing having the features of claim 1. A method for its production reads from claim 13.

The gist of the invention is to split cylindrical blank bodies and to bond the prepared split surface areas ( e.g. flat ground surface areas) by making use of diffusion bonding which seamlessly marries the cylinders not only in the metal portion but also in the portion of a hard alloy. This permits the use of high-strength steels for the metal portion which hitherto was impossible due to the necessary high preheating temperatures in conventional or electron beam welding, i.e. conventional bonding techniques. In addition, the seamless surface in the region of the bond prevents ingress of conveyed product in any remaining gaps. This prevents, on the one hand, corrosion in the region of the housing due to corrosive remainders of the material being processed, and on the other, the conveyed product itself being detrimented by particle release. In addition to the advantage of the tight bond the housing in accordance with the invention now makes it possible to also use conventional non-weldable materials for the blank barrel.

Advantageous embodiments are characterized by the remaining claims.

In accordance with one preferred embodiment the backing of the housing is made of a high-strength steel. These steels incompatible with conventional or electron beam welding (due to their preheat temperature) feature strength properties superior to those of conventional materials.

Preferably the backing is of steel containing in excess of 0.3% carbon and other alloying elements. These steels excel by having particularly high strength.

Advantageously, the backing is of steel necessitating preheating to in excess of 150°C in conventional welding. This corresponds to the cited steels, for example, containing in excess of 0.3% carbon and other alloying elements which hitherto were not suitable for application as the blank barrel due to the high preheating temperatures.

In accordance with one advantageous embodiment the backing is formed of austenitic or austenitic/ferritic chomium nickel steel. These steels have proven to be particularly suitable for backing the bimetallic blank barrel due to their strength properties.

As an alternative, the backing may be formulated of an austenitic nickel alloy, this too exhibiting excellent strength properties. In addition to high resistance to corrosion a nickel alloy features good resistance to sulfuric gases. Depending on the nature of the cold forming, chromium nickel steels also feature high strength and hardness whilst offering high resistance to corrosion. Adding nickel enhances the resistance to acids and caustic solutions.

Example materials for the backing of the housing are C 60 E, C 45 E, 38 MnVS 6, 46 MnVS 6, 51 CrV4, X5 CrNi 18 10, X5 CrNiMo 17 12 2, X2 CrNiMoN 22 5 3 or NiCrMo 22 9 Nb (as termed in accordance with DIN 17006).

In accordance with one preferred embodiment the lining of the housing is formulated as a hard alloy. This permits assuring high resistance to wear of the portion of the housing coming into direct contact with the conveyed product in enhancing the life of the housing even in aggressive mechanical and/or chemical heavy-duty applications.

Advantageously, the lining of the housing is formulated resistant or slow to corrosion. This likewise prevents rapid wear, resulting in mandatory replacement of the housing, and system downtime. In addition, this prevents the product from being soiled by released particles or the like.

Advantageously, the lining is formulated highly resistant to wear in thus greatly reducing the risk of it becoming worn out mechanically.

Examples for the lining of the housing are Fe-Cr-NI-C-B-Mo alloys containing metal carbides/borides or a Ni-Cr-Co-B-Si alloy with or without tungsten carbides. Example compositions of alloys for the lining are as follows:

| | | | | | | |
|---|---|---|---|---|---|---|
| C | 1.5-3.5 | 1.3-3.5 | 0.8-2.5 | 0.0-0.5 | 0.5-1.5 | 1.0-4.0 |
| Si | 1.0-3.5 | 0.5-3.3 | 1.0-3.0 | 1.0-4.0 | 1.0-4.0 | 1.0-3.0 |
| W | | | | | 6.0-10 | |
| Cr | 0.0-1.0 | Max 5.0 | 3.0-20.0 | 5.0-13.0 | 15-25 | 2.0-10.0 |
| Mo | 0.0-0.5 | 0.0-5.0 | 2.0-6.0 | 0.0-5.0 | 0-6.0 | 1.0-5.0 |
| Ni | 2.0-6.0 | Rest | 2.0-6.0 | Rest | 10-20 | 2.0-6.0 |
| Fe | Residue | Max 25 | Residue | Max 25 | Max 25 | Residue |
| Co | - | 3.0-7.0 | | 10-40 | Residue | 2.0-7.0 |
| WC | - | 25-50 | | | | 25-50 |
| Cu | - | | 0.5-1 | 0.0-2 | | |
| B | 0.8-3.5 | 1.0-3.0 | 1.0-3.5 | 1.0-3.5 | 1.0-3.5 | 1.0-3.5 |

Advantageously, the barrels are married axially parallel which in the case of cylindrical barrels is an arrangement often selected since it reliably ensures good implementation in compounding the materials to be processed.

In this arrangement the barrels may be configured substantially cylindrical and/or conical. It is obvious, of course, that the barrels when shaped as such can be married other than axially parallel when required by the application. Where conical barrels are concerned, there is furthermore the possibility of varying the axial spacing of the barrels over the cylindrical length in accordance with the diminishing bore of the barrels so that in the region of the smaller opening the axes are less spaced away from each other than in the region of the larger opening, although cylindrical barrels may also be married in this way when featuring a consistent diameter over their length.

In producing the bimetallic barrel housing hot isostatic pressing (HIP) is employed to advantage as a means of diffusion bonding the barrels along their split edges.

In accordance with a preferred embodiment, this entails filling the barrels with metal cores during diffusion bonding, the surface of the metal cores featuring an isolating layer to prevent the metal cores from being bonded to the tubes.

### Brief Description of the Drawings

The invention will now be detailed purely by way of example with reference to the attached Figs. in which:
- Fig. 1: is a cross-sectional view of a bimetallic barrel sectioned axially for producing a housing in accordance with the invention;
- Fig. 2: is a cross-sectional view of a twin screw extruder housing in accordance with the invention composed of bimetallic barrels as shown in Fig. 1; and
- Fig. 3: is a cross-sectional view of a further embodiment of a twin screw extruder housing in accordance with the invention composed of bimetallic barrels, the axes of which are not oriented parallel to each other.

### Embodiments of the Invention

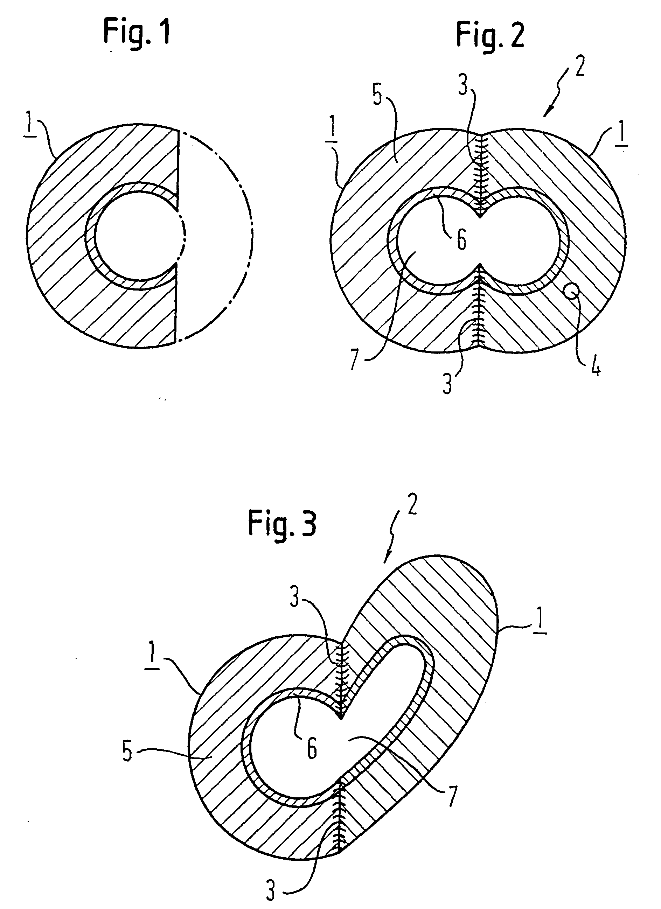

Referring now to Figs. 2 and 3 there is illustrated in each case a housing for a twin screw extruder, although, of course, it is just as possible to combine more than two individual barrels 1 in creating a multi-screw extruder housing.

The housings 2 as shown in Figs. 2 and 3 each comprise two barrels 1 bonded along a seam 3. Each barrel 1 comprises a backing 5 and a lining 6, the backing 5 being made of high-strength materials, for example steel having in excess of 0.3% carbon and other alloying elements. Other suitable materials for the backing 5 are austenitic/ferritic chromium nickel steel or an austenitic nickel alloy. The linings of the barrels 1, identified by the reference numeral 6 are formulated as a rule as a hard-wearing hard alloy resistant or slow to corrosion. Suitable materials for this purpose are Fe-Cr-Ni-C-B-Mo alloys containing metal carbides/borides or a Ni-Cr-Co-B-Si alloys with or without tungsten carbides.

As evident from Figs. 2 and 3 the barrels 1 are married along a seam 3, diffusion bonding being employed as the method for marrying the barrels. This enables the barrels 1 to be married fully in both the backing 5 and lining 6 without requiring several methods to be employed separately as would be necessary in using conventional jointing techniques due to the nature of the materials involved. One example of a diffusion bonding technique is HIP.

As evident from Figs. 2 and 3 the bonds are configured not only up to the vicinity of the hard alloy but throughout so that the cavity 7 of the housing comprises no seams after bonding.

It is furthermore evident from Fig. 2 how the bimetallic barrel may be additionally provided with cooling drillings 4 before or after being married.

It is understood that the outer shape of the housing 2 is not restricted to the embodiment as shown in Fig. 2 and 3, it instead being possible to produce optimum embodiments by corresponding machining, usually after marrying the individual original bimetallic barrels.

It is likewise to be noted that the circular barrels in the embodiment as shown may also be configured as conical barrels of changing cross-section, there also being in principle no limit to how the individual barrels are married, as evident from Figs. 2 and 3. Instead, these can be adapted to the requirements of the processing plant or the conveyed material to be processed. For example, as shown in Fig. 2, the barrels 1 may be married axially parallel. Likewise conceivable is an inclined arrangement of the axes of the barrels as evident from Fig. 3, this applying to cylindrical as well as to conical barrels. Also conceivable is a combination of cylindrical and conical barrels in configuring a housing.

Referring now to Figs. 1 and 2 the way in which a twin screw extruder housing is produced will be described. This description can be easily related to a housing having more than two barrels.

Firstly, rolled or forged round stock having the necessary strength properties is machined, e.g. by turning, on the outside, for example round to a diameter slightly larger than the finished outer diameter of the bimetallic cylinder. Subsequently, a bore is drilled internally, the diameter of which is likewise adapted to the design specifications. For this purpose it is suitable to use, for example, a deep-hole boring machine.

This thick-walled tube is filled with a prescribed amount of hard alloy powder, sufficient to attain the desired layer thickness, plus that required for machining. As regards its chemical composition the alloy powder is selected depending on the requirements (resistance to corrosion, strength) on the finished housing. After this, the face ends of the tube are closed off with steel disks to prevent weepage of the hard alloy powder during transport or during the coating process.

This not gas-tight closed off tube including the hard alloy powder is subsequently rotatingly heated in a gas furnace or inductively with a inline inductor (for example) to a temperature exceeding the melting point of the hard alloy powder filling but below the melting range of the tube steel.

By accelerating the hot tube with the molten hard alloy pool to a high speed the latter is uniformly distributed over the circumference and length of the bore. In the subsequent cooling process it is assured that the hard alloy is deposited as a lining but a few millimeters thick in the steel cylinder practically free of any inclusions and the like in being subjected to high transverse acceleration in entering into a solid diffusion bond with the parent steel tube, thus resulting in the bimetallic barrels.

Subsequently the conventionally produced bimetallic barrels, cylindrical in this case, are machined and prepared for bonding. For this purpose the bimetallic barrel is split, for example, lengthwise or in some other direction, and machined, so that split surface areas materialize permit the bimetallic barrels to be gaplessly married.

To maintain the process bore, i.e. the bore of the cylinders bore free during subsequent bonding, engineered coated metal or ceramic cores are produced and inserted in the bores. These cores are coated so that diffusion bonding of the cores with the hard alloy in the bores is avoided.

The barrels with the lining are then married to form the twin and multiple cylinders (as in this example) or multiple cones. A gas-tight capsule, for example a metal capsule is fitted, with which the barrel component is evacuated, clamped off gas-tight and welded. This prevents in subsequent diffusion bonding, for example by hot isostatic pressing (HIP), any undesirable oxide film materializing which would prevent bonding of the encapsulated parts whilst simultaneously making it impossible for the capsule to inflate during heatup.

To then implement actual bonding, the capsule is placed in a heatable high-pressure vessel which is subsequently closed off. The vessel is filled with a suitable inert gas, suitable gases being, for example, argon or nitrogen. This is followed by heating to temperatures in the range of 950°C to 1150°C, resulting in the trapped gas producing a high pressure in excess of 1000 bar. It is this high pressure and temperature that act on the capsule in the high-pressure vessel, resulting in gaps and cavities in the capsule being closed off in permitting diffusion bonding of the married barrels.

In conclusion, after cooling, the bimetallic cylinder capsule is removed and machined. The outer capsule is removed, the cores ejected from, or mechanically or chemically worked out of, the bores, after which the housing described as the bimetallic cylindrical in the present embodiment is finish-machined.

No additional processing steps whatsoever are thus needed to bond each of the linings and backings of the barrels to each other, this instead all being done in a single step namely in diffusion bonding.

The salient aspect of the invention is that bimetallic cylinders or bimetallic cones can now be married even when selecting high-strength materials or materials non-weldable by conventional methods for the barrels in a single bonding step whilst avoiding undesirable gaps and cavities materializing in the region of the bond.

## Claims

1. A housing (2) for plastics, metal powder, ceramic powder or food processing machines, more particularly for twin and multiple screw extruders, comprising married bimetallic barrels (1) including a lining (6) and a backing (5), **characterized in that** said bimetallic barrels (1) are diffusion bonded.

2. The housing (2) as set forth in claim 1, **characterized in that** said backing (5) is made of high-strength steel.

3. The housing (2) as set forth in any of the preceding claims, **characterized in that** said backing (5) is made of steel containing in excess of 0.3% carbon and other alloying elements.

4. The housing (2) as set forth in any of the preceding claims, **characterized in that** said backing (5) is made of steel requiring preheating to in excess of 150°C in conventional welding.

5. The housing (2) as set forth in any of the preceding claims, **characterized in that** said backing (5) is an austenitic or austenitic/ferritic chromium nickel steel.

6. The housing (2) as set forth in any of the claims 1 to 4, **characterized in that** said backing (5) is an austenitic nickel alloy

7. The housing (2) as set forth in claim 1, **characterized in that** said backing is made of C 60 E, C 45 E, 38 MnVS 6, 46 MnVS 6, 51 CrV4, X5 CrNi 18 10, X5 CrNiMo 17 12 2, X2 CrNiMoN 22 5 3 or NiCrMo 22 9 Nb (as termed in accordance with DIN 17006).

8. The housing (2) as set forth in any of the preceding claims, **characterized in that** said lining (6) is a hard alloy.

9. The housing (2) as set forth in any of the preceding claims, **characterized in that** said lining (6) is resistant or slow to corrosion.

10. The housing (2) as set forth in any of the preceding claims, **characterized in that** said lining (6) is highly resistant to wear.

11. The housing (2) as set forth in any of the preceding claims, **characterized in that** said lining (6) is made of Fe-Cr-Ni-C-B-Mo alloys containing metal carbides/borides or a Ni-Cr-Co-B-Si alloy with or without tungsten carbides.

12. The housing (2) as set forth in any of the claims 1 to 7, **characterized in that** said lining (6) is made of one of the following alloys:
| | | | | | | |
|---|---|---|---|---|---|---|
| C | 1.5-3.5 | 1.3-3.5 | 0.8-2.5 | 0.0-0.5 | 0.5-1.5 | 1.0-4.0 |
| Si | 1.0-3.5 | 0.5-3.3 | 1.0-3.0 | 1.0-4.0 | 1.0-4.0 | 1.0-3.0 |
| W | | | | | 6.0-10 | |
| Cr | 0.0-1.0 | Max 5.0 | 3.0-20.0 | 5.0-13.0 | 15-25 | 2.0-10.0 |
| Mo | 0.0-0.5 | 0.0-5.0 | 2.0-6.0 | 0.0-5.0 | 0-6.0 | 1.0-5.0 |
| Ni | 2.0-6.0 | Rest | 2.0-6.0 | Rest | 10-20 | 2.0-6.0 |
| Fe | Residue | Max 25 | Residue | Max 25 | Max 25 | Residue |
| Co | - | 3.0-7.0 | | 10-40 | Residue | 2.0-7.0 |
| WC | - | 25-50 | | | | 25-50 |
| Cu | - | | 0.5-1 | 0.0-2 | | |
| B | 0.8-3.5 | 1.0-3.0 | 1.0-3.5 | 1.0-3.5 | 1.0-3.5 | 1.0-3.5 |

13. The housing (2) as set forth in any of the preceding claims, **characterized in that** said barrels (1) are married axially parallel.

14. The housing (2) as set forth in any of the preceding claims, **characterized in that** said barrels (1) are configured substantially cylindrical and/or conical.

15. A method for producing a housing (2) including several married bimetallic barrels for plastics, metal powder, ceramic powder or food processing machines, comprising the steps:
- producing several barrel blanks;
- lining said barrel blanks with a hard alloy to form barrels;
- splitting said barrels;
- diffusion bonding said barrels at their split edges.

16. The method as set forth in claim 15, **characterized in that** said diffusion bonding step involves bonding said barrels by hot isostatic pressing (HIP).

17. The method as set forth in claim 15 or 16, **characterized in that** during said diffusion bonding step said barrels are filled with metal cores at the surface of which an isolating layer is provided.
